# EUROPEAN PATENT APPLICATION

(11) **EP 4 277 139 A1**
(43) Date of publication of application: **15.11.2023**
(21) Application number: 22758723.5
(22) Date of filing: 20.01.2022
(51) Int. Cl.: H04B 1/40

(54) **RADIO FREQUENCY MODULE AND ANTENNA SYSTEM, AND ELECTRONIC DEVICE**

(30) Priority: 25.02.2021 CN 202110214557
(71) Applicant: GUANGDONG OPPO MOBILE TELECOMMUNICATIONS CORP., LTD., Dongguan, Guangdong 523860 (CN)
(72) Inventor: ZHANG, Ting, Dongguan, Guangdong 523860 (CN); TONG, Lin, Dongguan, Guangdong 523860 (CN)
(74) Representative: Penza, Giancarlo
(86) International application number: PCT/CN2022/073000
(87) International publication number: WO 2022/179357

(57) **Abstract**

The present invention relates to the technical field of electronic devices, and in particular, to a radio frequency front-end module and an electronic device. The radio frequency front-end module comprises: an antenna switch unit, a first amplification unit, a second amplification unit, and a first switch unit. The antenna switch unit is connected to a first antenna interface, and the first antenna interface is configured to connect a first antenna. The first amplification unit is connected to the antenna switch unit and is configured to amplify a first frequency band of signal and transmit the first frequency band of signal to the antenna switch unit. The first switch unit is respectively connected to a second antenna interface and the antenna switch unit, and the second antenna interface is configured to connect a second antenna. The second amplification unit is connected to the first switch unit, the second amplification unit is configured to amplify a second frequency band of signal and transmit the second frequency band of signal to the first switch unit, and the first switch unit is configured to transmit the second frequency band of signal to the second antenna interface or the antenna switch unit.

## Description

### CROSS-REFERENCE OF RELATED APPLICATIONS

This application claims priority to Chinese Patent Application No. 202110214557.5 entitled "Radio frequency front-end module and electronic device" and filed on February 25, 2021, which is hereby incorporated by reference in its entirety.

### TECHNICAL FIELD

The present disclosure relates to the field of charging technologies, and in particular to a radio frequency front-end module, an antenna system, and an electronic device.

### BACKGROUND

With the development and advancement of technologies, the 5G communication technology has been widely used. The 5G communication is usually realized by using a 4G and 5G dual connectivity (EUTRA-NR Dual Connectivity, ENDC) technology. In the ENDC technology, a 4G base station serves as a master station and a 5G base station serves as a slave station, and a 5G network may be connected only after a 4G network is connected. That is, a radio frequency module in the electronic device needs to have both a 4G module and a 5G module. For example, the electronic device uses a combination of B3+N41 to enable the ENDC, where the electronic device is provided with a first power amplifier module for transmission at a B3 frequency band, and a second power amplifier module for transmission at a N41 frequency band. At present, the electronic devices gradually tend to be miniaturized and thinned, which leads to a limited space inside the electronic device. However, the first power amplifier module and the second power amplifier module would occupy a large space in the electronic device, which is not conducive to the arrangement of internal elements in the electronic device.

The above information disclosed in the Background section is merely used to enhance understanding of the background of the present disclosure, and therefore it may include information that does not constitute related art known to those of ordinary skill in the art.

### SUMMARY

Embodiments of the present disclosure provide a radio frequency front-end module, an antenna system, and an electronic device, to at least partially solve one or more problems caused by defects of the related art.

In a first aspect of the present disclosure, a radio frequency front-end module is provided, and the radio frequency front-end module includes:
an antenna switch module, connected with a first antenna interface, where the first antenna interface is configured to be connected with a first antenna;
a first amplifier unit, where the first amplifier unit is connected to the antenna switch module, and is configured to amplify a signal at a first frequency band, and transmit the signal at the first frequency band to the antenna switch module;
a first switch unit, connected with each of a second antenna interface and the antenna switch module, where the second antenna interface is configured to be connected with a second antenna; and
a second amplifier unit, where the second amplifier unit is connected with the first switch unit, and is configured to amplify a signal at a second frequency band, and transmit the signal at the second frequency band to the first switch unit, and the first switch unit is configured to transmit the signal at the second frequency band to the second antenna interface or the antenna switch module.

In a second aspect of the present disclosure, an antenna system is provided, where the antenna system includes the foregoing radio frequency front-end module.

In a third aspect of the present disclosure, an electronic device is provided, where the electronic device includes the foregoing antenna system.

It is understandable that the above general description and the following detailed description are only exemplary and explanatory, and are not intended to limit the present disclosure.

### BRIEF DESCRIPTION OF THE DRAWINGS

The drawings herein are incorporated into the description to constitute a part of the specification. The drawings illustrate embodiments consistent with the present disclosure, and are used to explain the principles of the present disclosure together with the description. Obviously, the drawings as described below are merely some embodiments of the present disclosure. Based on these drawings, other drawings can be obtained by those skilled in the art without inventive effort.
FIG. 1 is a schematic diagram illustrating a non-standalone mode of 5G according to the related art.
FIG. 2a is a schematic diagram illustrating an LTE dual link according to the related art.
FIG. 2b is a schematic diagram illustrating an LTE-NR dual link according to the related art.
FIG. 3 is a schematic diagram illustrating a first radio frequency front-end module according to an exemplary embodiment of the present disclosure.
FIG. 4 is a schematic diagram illustrating a second radio frequency front-end module according to an exemplary embodiment of the present disclosure.
FIG. 5 is a schematic diagram illustrating a third radio frequency front-end module according to an exemplary embodiment of the present disclosure.
FIG. 6 is a schematic diagram illustrating a fourth radio frequency front-end module according to an exemplary embodiment of the present disclosure.
FIG. 7 is a schematic diagram illustrating a fifth radio frequency front-end module according to an exemplary embodiment of the present disclosure.
FIG. 8 is a schematic diagram illustrating a sixth radio frequency front-end module according to an exemplary embodiment of the present disclosure.
FIG. 9 is a schematic diagram illustrating a seventh radio frequency front-end module according to an exemplary embodiment of the present disclosure.
FIG. 10 is a schematic diagram illustrating an eighth radio frequency front-end module according to an exemplary embodiment of the present disclosure.
FIG. 11 is a schematic diagram illustrating an electronic device according to an exemplary embodiment of the present disclosure.

### DETAILED DESCRIPTION OF PREFERRED EMBODIMENTS

Exemplary embodiments are now described more comprehensively with reference to the accompanying drawings. However, the exemplary embodiments can be implemented in multiple forms, and should not be construed as being limited to the embodiments set forth herein. Rather, these embodiments are provided for the purpose that the present disclosure are made thorough and comprehensive, and the concepts of the example embodiments are fully conveyed to those skilled in the art. The same reference sign denotes the same or similar parts throughout the drawings, and thus repeated description thereof will be omitted.

In addition, the described features, structures, or characteristics may be incorporated in one or more embodiments in any suitable manner. In the following description, many specific details are provided for thorough understanding of the embodiments of the present disclosure. However, those skilled in the art will recognize that the technical solutions of the present disclosure may be practiced without one or more of the specific details, or may be practiced with other methods, components, materials, devices, steps, etc. In other instances, well-known structures, methods, devices, implementations, materials, or operations are not illustrated or described in detail to avoid obscuring aspects of the present disclosure.

The block diagrams illustrated in the figures are merely functional entities, and do not necessarily correspond to physically separate entities. That is, these functional entities may be implemented in software, or these functional entities or a part thereof may be implemented in one or more software and hardware combined modules, or these functional entities may be implemented in different networks and/or processor devices and/or microcontroller devices.

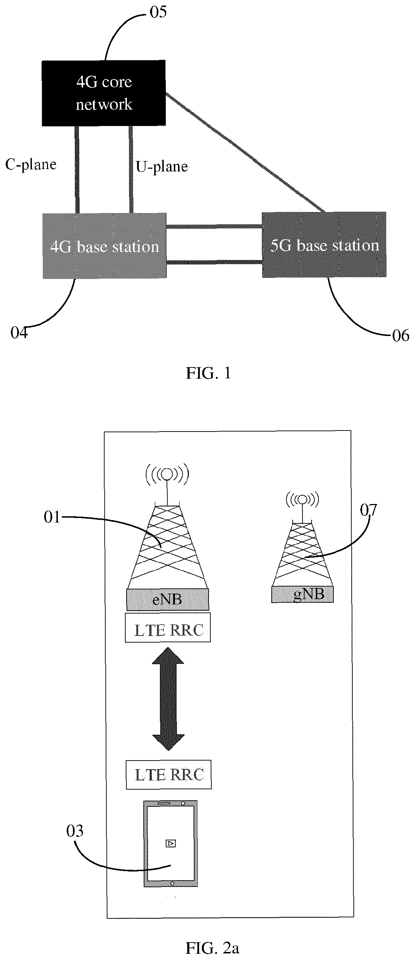

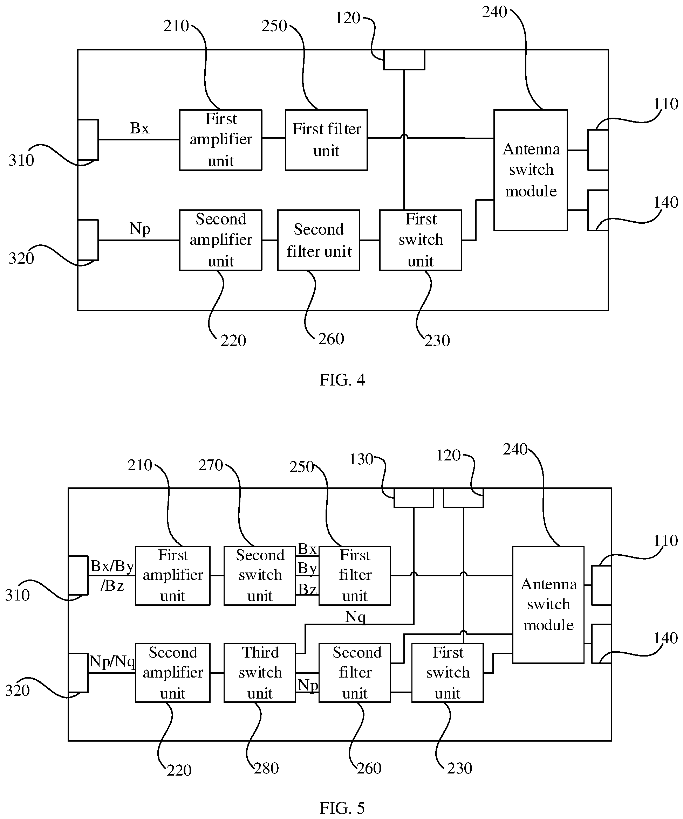

The 5G NSA (non-standalone) standard recently published by 3GPP adopts a mode of LTE and 5G NR (new radio) dual connectivity (ENDC). As illustrated in FIG. 1, 4G is used as an anchor for a control plane. A 4G base station 04 (eNB) serves as a master station, a 5G base station 06 (gNB) serves as a slave station, and a 4G core network 05 is adopted. The C-plane is responsible for processing a control signal, i.e., managing call connection. A U-plane is responsible for processing a voice signal, i.e., managing call content. In the NSA mode, the 5G network may be connected only after the 4G network is connected through the C-plane, that is, the 5G network cannot be connected separately before the connection of the 4G network.

In the LTE dual connectivity, a RRC protocol is established between the master station and the terminal, that is, the RRC message is only transmitted between the master station and the terminal. However, the master station and the slave station perform radio resource management (RRM) separately, and interaction and cooperation of the RRM functions are performed between the master station and the slave station through an X2 interface. For example, after the slave station allocates a resource, interaction is performed with the master station through the X2 interface, and the master station sends, to the terminal, an RRC message including the resource configured by the slave station. That is, as illustrated in FIG. 2a, the terminal 03 only receives the RRC message from the master station 01, and only makes a reply to the master station 01.

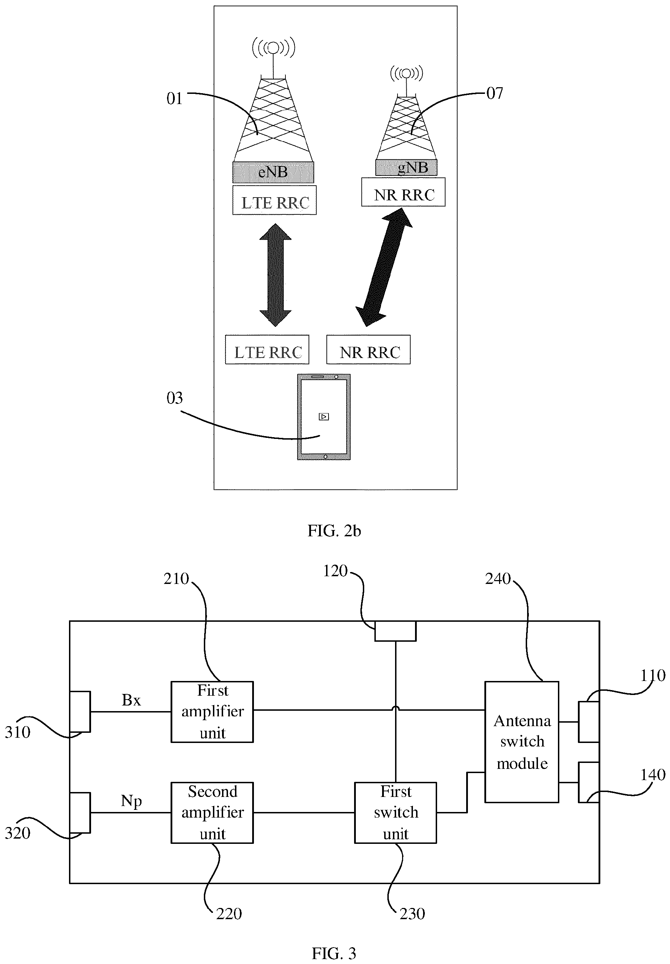

In the LTE-NR dual connectivity, not only the master station and the slave station perform the RRM separately, but also the RRC protocol is independently established between the master station and the terminal and between the slave station and the terminal. That is, as illustrated in FIG. 2b, the slave station 07 no longer performs the interaction and cooperation of RRM with the master station 01 through the X2 interface, and the RRC message can be transmitted directly from the slave station to the terminal 03. In addition, independent RRC connections also mean that the master station 01 and the slave station 07 may independently set the RRC measurements.

Firstly, an exemplary embodiment of the present disclosure provides a radio frequency front-end module. As illustrated in FIG. 3, the radio frequency front-end module includes an antenna switch module 240, a first amplifier unit 210, a first switch unit 230, and a second amplifier unit 220. The antenna switch module 240 is connected with a first antenna interface 110, and the first antenna interface 110 is configured to be connected with a first antenna. The first amplifier unit 210 is connected with the antenna switch module 240, and is configured to amplify a signal at a first frequency band Bx and transmit the signal at the first frequency band Bx to the antenna switch module 240. The first switch unit 230 is connected with each of a second antenna interface 120 and the antenna switch module 240. The second antenna interface 120 is configured to be connected with a second antenna. The second amplifier unit 220 is connected with the first switch unit 230, and is configured to amplify a signal at a second frequency band Np and transmit the signal at the second frequency band Np to the first switch unit 230. The first switch unit 230 is configured to transmit the signal at the second frequency band Np to the second antenna interface 120 or the antenna switch module 240.

In the radio frequency front-end module provided in the embodiments of the present disclosure, the first amplifier unit 210 receives and amplifies the signal at the first frequency band Bx, and the second amplifier unit 220 receives and amplifies the signal at the second frequency band Np. In the 4G and 5G dual connectivity mode, the signal at the second frequency band Np is transmitted to the second antenna interface 120 through the first switch unit 230, and the signal at the first frequency band Bx is transmitted to the second antenna interface 120 through the antenna switch module 240. In this way, the signal at the first frequency band Bx and the signal at the second frequency band Np can be simultaneously transmitted from one radio frequency module. In one aspect, the space for wiring inside an electronic device can be saved, which is conductive to the thinning of the electronic device. In another aspect, the cost of the electronic device can be reduced. In addition, in the case where the first switch unit 230 switches the signal at the second frequency band Np to the second antenna interface 120, an intermodulation distortion signal is avoided from being generated by the signal at the first frequency band Bx and the signal at the second frequency band Np.

The radio frequency front-end module provided in the embodiment of the present disclosure may be a power amplifier module. In the embodiments of the present disclosure, the first frequency band Bx may be B3, and the second frequency band Np may be N41. The first amplifier unit 210 may include a first power amplifier 211, and the second amplifier unit 220 may include a second power amplifier 221. The first amplifier unit 210 is connected with a first signal interface 310, and the signal at the B3 frequency is input to the first amplifier unit 210 through the first signal interface 310. The first amplifier unit 210 performs power amplification on the signal at the B3 frequency band. The second amplifier unit 220 is connected with a second signal interface 320, and the signal at the N41 frequency is input to the second amplifier unit 220 through the second signal interface 320. The second amplifier unit 220 performs power amplification on the signal at the N41 frequency band.

An uplink frequency range of the B3 frequency band is from 1710 MHz to 1785 MHz, a downlink frequency range of the B3 frequency band is from 1805 MHz to 1880 MHz, and the uplink and downlink frequency ranges of N41 are both from 2496 MHz to 2690 MHz. In a case where an uplink signal at the B3 frequency band and an uplink signal at the N41 frequency band pass through the antenna switch module 240, a 4-order intermodulation distortion (IMD4) signal is generated, and a frequency range of which is from 1422 MHz to 1960 MHz. The frequency range of the 4-order intermodulation distortion signal covers the downlink frequency range of the B3 frequency band, and thus the receiving sensitivity of the radio frequency module at the B3 frequency band is affected. In the embodiments of the present disclosure, when the uplink signal at the B3 frequency band is transmitted to the antenna switch module 240, the uplink signal at the N41 frequency band is switched to the second antenna interface 120 through the first switch unit 230, to avoid an intermodulation distortion signal that would otherwise be generated when the uplink signal at the B3 frequency band and the uplink signal at the N41 frequency band pass through the antenna switch module 240.

On this basis, as illustrated in FIG. 4, the radio frequency front-end module provided in the embodiments of the present disclosure may further include a first filter unit 250 and a second filter unit 260. An input terminal of the first filter unit 250 is connected with an output terminal of the first amplifier unit 210, and an output terminal of the first filter unit 250 is connected with an input terminal of the antenna switch module 240. The first filter unit 250 is configured to filter a signal output by the first amplifier unit 210. An input terminal of the second filter unit 260 is connected with an output terminal of the second amplifier unit 220, and an output terminal of the second filter unit 260 is connected with an input terminal of the first switch unit 230. The second filter unit 260 is configured to filter a signal output by the second amplifier unit 220.

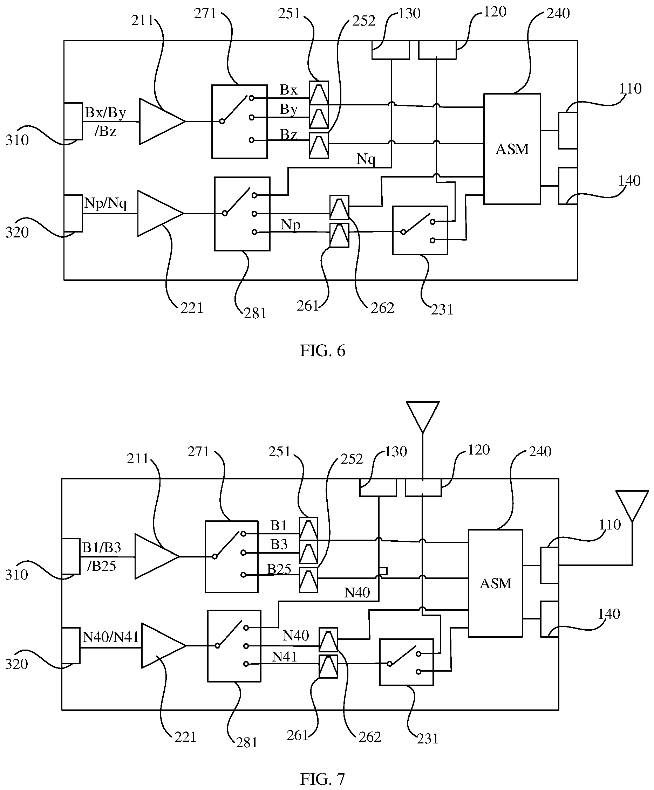

As illustrated in FIG. 6, the first switch unit 230 may include a single-pole double-throw switch 231. A common terminal of the single-pole double-throw switch 231 is connected with the second filter unit 260, a first throw terminal of the single-pole double-throw switch 231 is connected with the antenna switch module 240, and a second throw terminal of the single-pole double-throw switch 231 is connected with the second antenna interface 120.

In some feasible implementations of the present disclosure, the first amplifier unit 210 is further configured to receive and amplify a signal at a third frequency band By and a signal at the fourth frequency band Bz. The first signal interface 310 may be connected to a signal source of the first frequency band Bx, a signal source of the third frequency band By, and a signal source of the fourth frequency band Bz. The first frequency band Bx, the third frequency band By, and the fourth frequency band Bz may be 4G frequency bands. The first signal interface 310 is connected to a signal source of one frequency band at a time.

On this basis, the first filter unit 250 may include multiple filtering channels, and each filtering channel receives an uplink signal at one frequency band and filters the corresponding signal. For example, the first filter unit 250 may include three filtering channels. Among the three filtering channels, a first filtering channel is configured to filter the signal at the first frequency band Bx, a second filtering channel is configured to filter the signal at the third frequency band By, and a third filtering channel is configured to filter the signal at the fourth frequency band Bz.

Further, as illustrated in FIG. 5, the radio frequency front-end module provided in the embodiments of the present disclosure may further include a second switch unit 270. An input terminal of the second switch unit 270 is connected with the output terminal of the first amplifier unit 210, and output terminals of the second switch unit 270 are respectively connected with the multiple filtering channels. The second switch unit 270 may include a single-pole multi-throw switch, and the number of the throw terminals of the single-pole multi-throw switch may be consistent with the number of frequency bands of the radio frequency signal output by the first amplifier unit. For example, the second switch unit 270 may include a first single-pole triple-throw switch 271, a common terminal of the first single-pole triple-throw switch 271 is connected with the output terminal of the first amplifier unit 210, a first throw terminal of the first single-pole triple-throw switch 271 is connected with the first filtering channel, a second throw terminal of the first single-pole triple-throw switch 271 is connected with the second filtering channel, and a third throw terminal of the first single-pole triple-throw switch 271 is connected with the third filtering channel.

The signal at each frequency band needs to be filtered by one filtering device. When the first filter unit 250 needs to filter the signals at the three frequency bands, as illustrated in FIG. 6, the first filter unit 250 may include a duplexer 251 and a first filter 252. The duplexer 251 is connected to the first filtering channel and the second filtering channel, and the first filter 252 is connected to the third filtering channel. The duplexer 251 has two input terminals, where the signal at the first frequency band Bx is transmitted to a first input terminal of the duplexer 251, and the signal at the third frequency band By is transmitted to a second input terminal of the duplexer 251. The first input terminal of the duplexer 251 is connected with the first throw terminal of the single-pole triple-throw switch, the second input terminal of the duplexer 251 is connected with the second throw terminal of the single-pole triple-throw switch, and an output terminal of the duplexer 251 is connected with the antenna switch module 240. An input terminal of the first filter 252 is connected with the third throw terminal of the first single-pole triple-throw switch 271, and the input terminal of the first filter 252 receives the signal at the fourth frequency band Bz. An output terminal of the first filter 252 is connected with the antenna switch module 240.

The first single-pole triple-throw switch 271 is turned on based on the frequency band of the signal output by the first amplifier unit 210. When the frequency band of the signal output by the first amplifier unit 210 is the first frequency band Bx, the common terminal of the first single-pole triple-throw switch 271 is connected with the first throw terminal, to transmit the signal at the first frequency band Bx to the first input terminal of the duplexer 251. When the frequency band of the signal output by the first amplifier unit 210 is the third frequency band By, the common terminal of the first single-pole triple-throw switch 271 is connected with the second throw terminal, to transmit the signal at the third frequency band By to the second input terminal of the duplexer 251. When the frequency band of the signal output by the first amplifier unit 210 is the fourth frequency band Bz, the common terminal of the first single-pole triple-throw switch 271 is connected with the third throw terminal, to transmit the signal at the fourth frequency band Bz to the input terminal of the first filter 252.

In some embodiments, the first filter unit 250 may include a triplexer, where the triplexer is connected to each of the three filtering channels, and three input terminals of the triplexer are connected to the three throw terminals of the first single-pole triple-throw switch 271. A first input terminal of the triplexer is connected with the first throw terminal of the first single-pole triple-throw switch 271, a second input terminal of the triplexer is connected with the second throw terminal of the first single-pole triple-throw switch 271, and a third input terminal of the triplexer is connected with the third throw terminal of the first single-pole triple-throw switch 271.

The first single-pole triple-throw switch 271 is turned on based on the frequency band of the signal output by the first amplifier unit 210. When the frequency band of the signal output by the first amplifier unit 210 is the first frequency band Bx, the common terminal of the first single-pole triple-throw switch 271 is connected with the first throw terminal, to transmit the signal at the first frequency band Bx to the first input terminal of the triplexer. When the frequency band of the signal output by the first amplifier unit 210 is the third frequency band By, the common terminal of the first single-pole triple-throw switch 271 is connected with the second throw terminal, to transmit the signal at the third frequency band By to the second input terminal of the triplexer. When the frequency band of the signal output by the first amplifier unit 210 is the fourth frequency band Bz, the common terminal of the first single-pole triple-throw switch 271 is connected with the third throw terminal, to transmit the signal at the fourth frequency band Bz to the third input terminal of the triplexer.

In some implementations, the first filter unit 250 may include three filters, and the three filters are respectively connected with the three throw terminals of the first single-pole triple-throw switch 271. The signal at the first frequency band Bx, the signal at the third frequency band By, and the signal at the fourth frequency band Bz are respectively filtered through the three filters.

The first single-pole triple-throw switch 271 is turned on based on the frequency band of the signal output by the first amplifier unit 210. When the frequency band of the signal output by the first amplifier unit 210 is the first frequency band Bx, the common terminal of the first single-pole triple-throw switch 271 is connected with the first throw terminal, to transmit the signal at the first frequency band Bx to the output terminal of a corresponding filter. When the frequency band of the signal output by the first amplifier unit 210 is the third frequency band By, the common terminal of the first single-pole triple-throw switch 271 is connected with the second throw terminal, to transmit the signal at the third frequency band By to an input terminal of a corresponding filter. When the frequency band of the signal output by the first amplifier unit 210 is the fourth frequency band Bz, the common terminal of the first single-pole triple-throw switch 271 is connected with the third throw terminal, to transmit the signal at the fourth frequency band Bz to an input terminal of a corresponding filter.

In some feasible implementations of the present disclosure, the second amplifier unit 220 is further configured to receive and amplify a signal at a fifth frequency band Nq. The second signal interface 320 may be connected to a signal source of the second frequency band Np and a signal source of the fifth frequency band Nq. The second frequency band Np and the fifth frequency band Nq may be 5G frequency bands. The second signal interface 320 is connected with a signal source of one frequency band at a time.

On this basis, the second filter unit 260 may include multiple filtering channels, and each filtering channel is configured to filter an uplink signal at one frequency band. For example, the second filter unit 260 may include two filtering channels, in which a fourth filtering channel may be configured to filter the signal at the second frequency band Np, and a fifth filtering channel may be configured to filter the signal at the fifth frequency band Nq.

Further, the radio frequency front-end module provided in the embodiments of the present disclosure may further include a third switch unit 280, and the third switch unit 280 is connected with each of the second amplifier unit 220, the fourth filtering channel and the fifth filtering channel.

The third switch unit 280 may include a second single-pole triple-throw switch 281. A common terminal of the second single-pole triple-throw switch 281 is connected with the second amplifier unit 220, a first throw terminal of the second single-pole triple-throw switch 281 may be connected with the fourth filtering channel, and a second throw terminal of the second single-pole triple-throw switch 281 may be connected with the fifth filtering channel.

The second filter unit 260 may include a second filter 261 and a third filter 262. The second filter 261 is connected to the fourth filtering channel, and the third filter 262 is connected to the fifth filtering channel.

Further, the radio frequency front-end module may further include a third antenna interface 130 configured to be connected with a third antenna. The third antenna interface 130 is connected with a third throw terminal of the second single-pole triple-throw switch 281. The second single-pole triple-throw switch 281 may be turned on based on the frequency band of the signal received by the second signal interface 320 and the frequency band of the signal received by the first signal interface 310. For example, when the first signal interface 310 receives the signal at the first frequency band Bx, and the second signal interface 320 receives the signal at the second frequency band Np, the common terminal of the second single-pole triple-throw switch 281 may be connected with the first throw terminal; and when the second signal interface 320 receives the signal at the fifth frequency band Nq, and the first signal interface 310 receives the signal at the first frequency band Bx, the common terminal of the second single-pole triple-throw switch 281 may be connected with the third throw terminal.

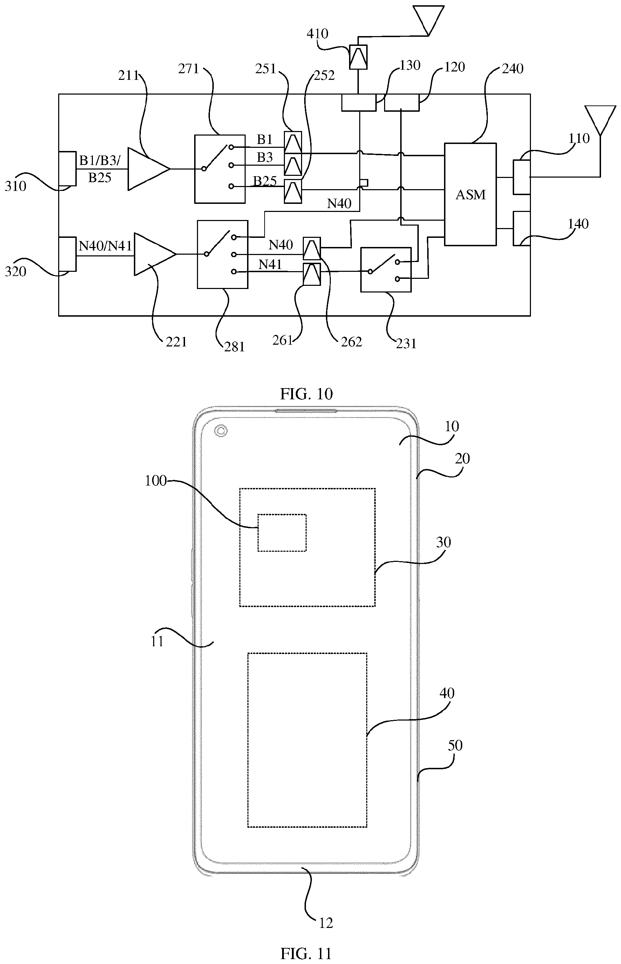

As illustrated in FIG. 10, a fourth filter 410 may be further provided between the third antenna interface 130 and the third antenna, where the fourth filter 410 may be provided externally to the radio frequency front-end module. The fourth filter 410 is configured to be connected with the third antenna and the third antenna interface 130. When the third throw terminal of the second single-pole triple-throw switch 281 is threw to, i.e., connected with the common terminal, the fourth filter 410 filters the signal at the fifth frequency band. For example, a signal at the N40 frequency band may be transmitted to the third antenna interface 130 through the second single-pole triple-throw switch 281, and then transmitted to the third antenna through the fourth filter 410.

In the embodiments of the present disclosure, the radio frequency front-end module may further include a packaging housing, and the packaging housing has an accommodating portion. The first amplifier unit 210, the second amplifier unit 220, the first switch unit 230, the second switch unit 270, the third switch unit 280, the first filter unit 250, the second filter unit 260, and the antenna switch module 240 are provided in the accommodating portion. The first signal interface 310, the second signal interface 320, the first antenna interface 110, the second antenna interface 120, and the third antenna interface 130 may be provided at a packaging housing. The first signal interface 310, the second signal interface 320, the first antenna interface 110, the second antenna interface 120, and the third antenna interface 130 may be pads or other pins.

As illustrated in FIG. 7, the first frequency band Bx may be B3, the second frequency band Np may be N41, the first signal interface 310 receives the signal at the B3 frequency band, and the second signal interface 320 receives the signal at the N41 frequency band. The first amplifier unit 210 amplifies the signal at the B3 frequency band, the common terminal of the first single-pole triple-throw switch 271 is connected with the first throw terminal of the first single-pole triple-throw switch, to transmit the signal at the B3 frequency band to the duplexer 251, and the duplexer 251 in turn transmits the signal at the B3 frequency band to the antenna switch module 240. The second amplifier unit 220 amplifies the signal at the N41 frequency band, the common terminal of the second single-pole three-throw switch 281 is connected with the first throw terminal of the second single-pole triple-throw switch, to transmit the signal at the N41 frequency band to the second filter 261. The signal at the N41 frequency band is further transmitted to the second antenna interface 120 through the single-pole double-throw switch 231, and then transmitted to a corresponding antenna through the second antenna interface 120.

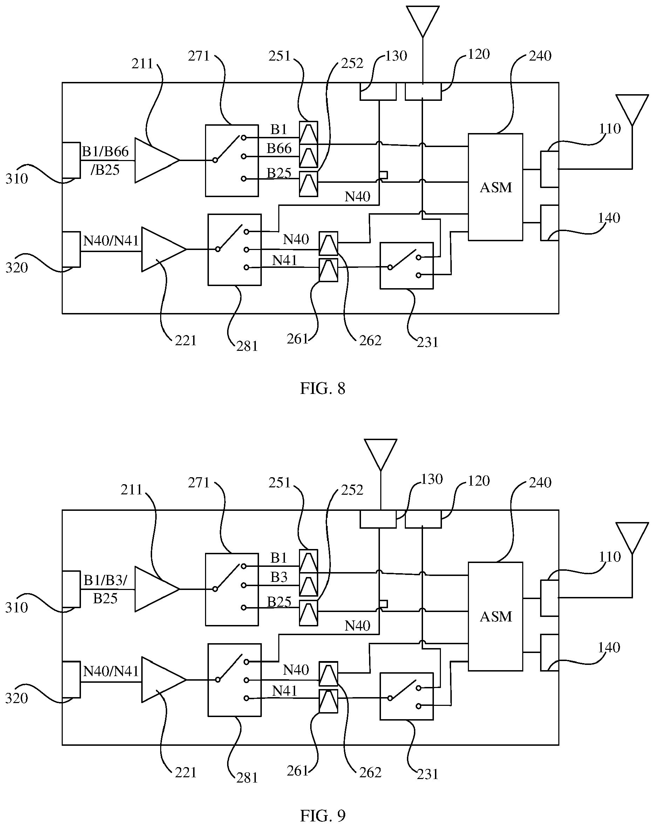

In some implementations, as illustrated in FIG. 8, the first frequency band Bx may be B66, the second frequency band Np may be N41, the first signal interface 310 receives the signal at the B66 frequency band, and the second signal interface 320 receives the signal at the N41 frequency band. The first amplifier unit 210 amplifies the signal at the B66 frequency band, the common terminal of the first single-pole triple-throw switch 271 is connected with the first throw terminal of the first single-pole triple-throw switch, to transmit the signal at the B66 frequency band to the duplexer 251, and the duplexer 251 in turn transmits the signal at the B66 frequency band to the antenna switch module 240. The second amplifier unit 220 amplifies the signal at the N41 frequency band, and the common terminal of the second single-pole three-throw switch 281 is connected with the first throw terminal of the second single-pole three-throw switch, to transmit the signal at the N41 frequency band to the second filter 261. The signal at the N41 frequency band is further transmitted to the second antenna interface 120 through the single-pole double-throw switch 231, and then transmitted to the corresponding antenna through the second antenna interface 120.

The third frequency band By may be B1, the second frequency band Np may be N41, the first signal interface 310 receives the signal at the B1 frequency band, and the second signal interface 320 receives the signal at the N41 frequency band. The first amplifier unit 210 amplifies the signal at the B1 frequency band, the common terminal of the first single-pole triple-throw switch 271 and the first throw terminal of the first single-pole triple-throw switch, to transmit the signal at the B1 frequency band to the duplexer 251, and the duplexer 251 in turn transmits the signal at the B1 frequency band to the antenna switch module 240. The second amplifier unit 220 amplifies the signal at the N41 frequency band, and the common terminal of the second single-pole three-throw switch 281 is connected with the first throw terminal of the second single-pole three-throw switch, to transmit the signal at the N41 frequency band to the second filter 261. The signal at the N41 frequency band is transmitted to the second antenna interface 120 through the single-pole double-throw switch 231, and then transmitted to the corresponding antenna through the second antenna interface 120. Alternatively, the signal at the N41 frequency band may be transmitted to the antenna switch module 240 through the single-pole triple-throw switch, and transmitted to a corresponding antenna through the antenna switch module 240.

The fourth frequency band Bz may be B25, the second frequency band Np may be N41, the first signal interface 310 receives the signal at the B25 frequency band, and the second signal interface 320 receives the signal at the N41 frequency band. The first amplifier unit 210 amplifies the signal at the B25 frequency band, the common terminal of the first single-pole three-throw switch 271 is connected with the third throw terminal of the first single-pole three-throw switch, to transmit the signal at the B25 frequency band to the first filter 252, and the signal at the B25 frequency band is transmitted to the antenna switch module 240 through the first filter 252. The second amplifier unit 220 amplifies the signal at the N41 frequency band, the common terminal of the second single-pole three-throw switch 281 is connected with the first throw terminal of the second single-pole three-throw switch, to transmit the signal at the N41 frequency band to the second filter 261. The signal at the N41 frequency band is transmitted to the second antenna interface 120 through the single-pole double-throw switch 231, and then transmitted to the corresponding antenna through the second antenna interface 120. Alternatively, the signal at the N41 frequency band may be transmitted to the antenna switch unit 240 through the single-pole triple-throw switch, and then transmitted to the corresponding antenna through the antenna switch module 240.

As illustrated in FIG. 9, the first frequency band Bx may be B3, the fifth frequency band Nq may be N40, the first signal interface 310 receives the signal at the B3 frequency band, and the second signal interface 320 receives the signal at the N40 frequency band. The first amplifier unit 210 amplifies the signal at the B3 frequency band, the common terminal of the first single-pole triple-throw switch 271 is connected with the first throw terminal of the first single-pole triple-throw switch, to transmit the signal at the B3 frequency band to the duplexer 251, and the duplexer 251 in turn transmits the signal at the B3 frequency band to the antenna switch module 240. The second amplifier unit 220 amplifies the signal at the N40 frequency band, and the common terminal of the second single-pole three-throw switch 281 is connected with the third throw terminal of the second single-pole three-throw switch, to transmit the signal at the N40 frequency band to the third antenna interface 130. A filter may be provided externally to the third antenna interface 130, and the filter is connected with an antenna for transmission of the signal at the N40 frequency band.

The third frequency band By may be B1, the fifth frequency band Nq may be N40, the first signal interface 310 receives the signal at the B1 frequency band, and the second signal interface 320 receives the signal at the N40 frequency band. The first amplifier unit 210 amplifies the signal at the B1 frequency band, the common terminal of the first single-pole three-throw switch 271 is connected with the second throw terminal of the first single-pole three-throw switch, to transmit the signal at the B1 frequency band to the duplexer 251, and the duplexer 251 in turn transmits the signal at the B1 frequency band to the antenna switch module 240. The second amplifier unit 220 amplifies the signal at the N40 frequency band, and the common terminal of the second single-pole three-throw switch 281 is connected with the third throw terminal of the second single-pole three-throw switch, to transmit the signal at the N40 frequency band to the third antenna interface 130. A filter may be provided externally to the third antenna interface 130, and the filter is connected with an antenna for transmission of the signal at the N40 frequency band. Alternatively, the common terminal of the second single-pole triple-throw switch 281 may be connected to the second throw terminal of the second single-pole triple-throw switch, and the signal at the N40 frequency band is transmitted to the antenna switch module 240 through the third filter 262.

The third frequency band By may be B25, the fifth frequency band Nq may be N40, the first signal interface 310 receives the signal at the B25 frequency band, and the second signal interface 320 receives the signal at the N40 frequency band. The first amplifier unit 210 amplifies the signal at the B25 frequency band, the common terminal of the first single-pole three-throw switch 271 is connected with the third throw terminal of the first single-pole three-throw switch, to transmit the signal at the B25 frequency band to the first filter 252, and the signal at the B1 frequency band is transmitted to the antenna switch module 240 through the first filter 252. The second amplifier unit 220 amplifies the signal at the N40 frequency band, and the common terminal of the second single-pole three-throw switch 281 is connected with the third throw terminal of the second single-pole three-throw switch, to transmit the signal at the N40 frequency band to the third antenna interface 130. A filter may be provided externally to the third antenna interface 130, and the filter is connected with an antenna for transmission of the signal at the N40 frequency band. Alternatively, the common terminal of the second single-pole triple-throw switch 281 may be connected to the second throw terminal of the second single-pole triple-throw switch, and the signal at the N40 frequency band is transmitted to the antenna switch module 240 through the third filter 262.

According to the foregoing, the radio frequency front-end module provided in the embodiments of the present disclosure can support ENDC combinations of B3+N41, B3+N40, B25+N41, B66+N41 and B1+N41 and combinations of other frequency bands, and the applicability of the radio frequency front-end module is improved.

The radio frequency front-end module may further include a first switching unit and a second switching unit. The first switching unit is connected with the first amplifier unit 210, and the first unit is configured to perform switching among the signal at the first frequency band Bx, the signal at the third frequency band By, and the signal at the fourth frequency band Bz for input to the first amplifier unit 210. The second switching unit is configured to perform switching between the signal at the second frequency band Np and the signal at the fifth frequency band Nq for input to the second amplifier unit 220.

In the radio frequency front-end module provided in the embodiments of the present disclosure, the first amplifier unit 210 receives and amplifies the signal at the first frequency band Bx, and the second amplifier unit 220 receives and amplifies the signal at the second frequency band Np. In the 4G and 5G dual connectivity mode, the signal at the second frequency band Np is transmitted to the second antenna interface 120 through the first switch unit 230, and the signal at the first frequency band Bx is transmitted to the second antenna interface 120 through the antenna switch module 240. In this way, the signal at the first frequency band Bx and the signal at the second frequency band Np can be simultaneously transmitted from one radio frequency module. In one aspect, the space for wiring inside an electronic device can be saved, which is conductive to the thinning of the electronic device. In another aspect, the cost of the electronic device can be reduced. In addition, in the case where the first switch unit 230 switches the signal at the second frequency band Np to the second antenna interface 120, an intermodulation distortion signal is avoided from being generated by the signal at the first frequency band Bx and the signal at the second frequency band Np.

An antenna system is further provided in the exemplary embodiment of the present disclosure. The antenna system includes the foregoing radio frequency front-end module, a first antenna, a second antenna, a third antenna, and a fourth antenna. The first antenna is connected with the first antenna interface 110, the second antenna is connected with the second antenna interface 120, and the third antenna is connected with the third antenna interface 130. The first antenna interface may be directly connected with a first antenna radiator, the second antenna interface may be connected with a second antenna radiator through a filter or a switch element, and the third antenna interface may be connected with a third antenna radiator through a filter or a switch element. The radio frequency front-end module may further be provided with a fourth antenna interface 140, where the fourth antenna interface 140 is connected with the antenna switch module 240, and the fourth antenna interface 140 is configured to be connected with the fourth antenna.

An exemplary embodiment of the present disclosure further provides an electronic device, as illustrated in FIG. 11, the electronic device includes the foregoing radio frequency front-end module 100.

The radio frequency front-end module 100 includes the first antenna interface 110, the antenna switch module (ASM) 240, the second antenna interface 120, the first amplifier unit 210, the second amplifier unit 220, and the first switch unit 230. The first antenna interface 110 is configured to be connected with the first antenna, and it is connected with the antenna switch module 240. The second antenna interface 120 is configured to be connected with the second antenna. The first amplifier unit 210 is connected with the antenna switch module 240, and is configured to receive and amplify a signal at the first frequency band Bx, and transmit the signal at first frequency band Bx to the antenna switch module 240. The second amplifier unit 220 is configured to receive and amplify a signal at the second frequency band Np. The first switch unit 230 is connected with each of the second amplifier unit 220, the second antenna interface 120, and the antenna switch module 240, and the first switch unit 230 is configured to transmit the signal at the second frequency band Np to the second antenna interface 120 or the antenna switch module 240.

Further, the electronic device provided in the embodiments of the present disclosure may further include a first antenna, a second antenna, a third antenna, and a fourth antenna. The first antenna is connected with the first antenna interface 110, the second antenna is connected with the second antenna interface 120, and the third antenna is connected with the third antenna interface 130. The first antenna interface may be directly connected with a first antenna radiator, the second antenna interface may be connected with a second antenna radiator through a filter or a switch element, and the third antenna interface may be connected with a third antenna radiator through a filter or a switch element. The radio frequency front-end module may further be provided with a fourth antenna interface 140, where the fourth antenna interface 140 is connected with the antenna switch module 240, and the fourth antenna interface 140 is configured to be connected with the fourth antenna.

In the electronic device provided in the embodiments of the present disclosure, the first amplifier unit 210 receives and amplifies the signal at the first frequency band Bx, and the second amplifier unit 220 receives and amplifies the signal at the second frequency band Np. In the 4G and 5G dual connectivity mode, the signal at the second frequency band Np is transmitted to the second antenna interface 120 through the first switch unit 230, and the signal at the first frequency band Bx is transmitted to the second antenna interface 120 through the antenna switch module 240. In this way, the signal at the first frequency band Bx and the signal at the second frequency band Np can be simultaneously transmitted from one radio frequency module. In one aspect, the space for wiring inside an electronic device can be saved, which is conductive to the thinning of the electronic device. In another aspect, the cost of the electronic device can be reduced. In addition, in the case where the first switch unit 230 switches the signal at the second frequency band Np to the second antenna interface 120, an intermodulation distortion signal is avoided from being generated by the signal at the first frequency band Bx and the signal at the second frequency band Np.

The electronic device provided in the embodiments of the present disclosure may be a mobile phone, a tablet computer, an electronic reader, a wearable device, a vehicle-mounted computer, a smart screen or a notebook computer. It is illustrated by taking a case where the electronic device is a mobile phone as an example.

The electronic device provided by the embodiments of the present disclosure further includes a display screen 10, a mainboard 30, a battery 40, and a rear cover 50. The display screen 10 is mounted on a frame 20, to provide a display surface of the terminal device. The display screen 10 is used as a front case of the electronic device. The rear cover 50 is adhered to the frame by a double-sided adhesive. The display screen 10, the frame 20 and the rear cover 50 define an accommodating space for accommodating other electronic components or functional modules of the electronic device. The display screen 10 provides the display surface of the electronic device for displaying information such as images and texts. The display screen 10 may be a liquid crystal display (LCD) or an organic light-emitting diode (OLED) display screen.

A glass cover plate may be provided on the display screen 10. The glass cover plate may cover the display screen 10 to protect the display screen 10 from being scratched or damaged by water.

The display screen 10 may include a display area 11 and a non-display area 12. The display area 11 performs a display function of the display screen 10 to display information such as an image and text. The non-display area 12 does not display information. The non-display area 12 may be provided with functional modules such as a camera, a receiver, and a proximity sensor. In some embodiments, the non-display area 12 may include at least one area located above and below the display area 11.

The display screen 10 may be a full screen. In this case, the display screen 10 may display information in full screen, so that the electronic device has a large screen-to-body ratio. The display screen 10 includes only the display area 11 and does not include the non-display area. In this case, functional modules, such as a camera and a proximity sensor, in the electronic device may be hidden below the display screen 10, and the fingerprint recognition module of the electronic device may be provided on the back of the electronic device.

The frame 20 may be a hollow frame structure. The frame 20 may be made from metal or plastic. The mainboard 30 is mounted inside the accommodating space. For example, the mainboard 30 may be mounted on the frame 20 and accommodated in the accommodating space with the frame 20. A grounding point is provided on the mainboard 30 to realize grounding of the mainboard. The mainboard 30 may be integrated thereon with one or more of a motor, a microphone, a speaker, a receiver, an earphone interface, a universal serial bus interface (USB interface), a camera, a proximity sensor, an ambient light sensor, a gyroscope, and a processor. The display screen 10 may be electrically connected to the mainboard 30.

The mainboard 30 is provided with a display control circuit. The display control circuit outputs an electrical signal to the display screen 10 to control the display screen 10 to display information.

The battery 40 is mounted inside the accommodating space. For example, the battery 40 may be mounted on the frame 20 and accommodated in the accommodating space along with the frame 20. The battery 40 may be electrically connected to the mainboard 30 to supply power to the electronic device. The mainboard 30 may be provided with a power management circuit, and the power management circuit is configured to distribute the voltage provided by the battery 40 to various electronic components in the electronic device.

The rear cover 50 is configured to offer an external contour of the electronic device. The rear cover 50 may be one-piece formed. In the forming process of the rear cover 50, structures, such as a hole for a rear camera and a mounting hole for fingerprint identification module, may be provided in the rear cover 50.

Other embodiments of the present disclosure will be readily occurred to those skilled in the art upon consideration of the specification and practice of the present disclosure herein. The present disclosure is intended to cover any variations, uses, or adaptations of the present disclosure which follow the general principles of the present disclosure, and include common or customary means in the art that are not disclosed in the present disclosure. The specification and the embodiments are to be regarded as being exemplary only, and the true scope and spirit of the present disclosure are subject to the claims.

It is understandable that the present disclosure is not limited to the precise structures already described above and illustrated in the drawings, and that various modifications and changes may be made without departing from the scope thereof. The scope of the present disclosure is defined only by the appended claims.

## Claims

1. A radio frequency front-end module, comprising:
an antenna switch module, connected with a first antenna interface, wherein the first antenna interface is configured to be connected with a first antenna;
a first amplifier unit, wherein the first amplifier unit is connected with the antenna switch module, and is configured to amplify a signal at a first frequency band, and transmit the signal at the first frequency band to the antenna switch module;
a first switch unit, connected with each of a second antenna interface and the antenna switch module, wherein the second antenna interface is configured to be connected with a second antenna; and
a second amplifier unit, wherein the second amplifier unit is connected with the first switch unit, and is configured to amplify a signal at a second frequency band, and transmit the signal at the second frequency band to the first switch unit, and the first switch unit is configured to transmit the signal at the second frequency band to the second antenna interface or the antenna switch module.

2. The radio frequency front-end module of claim 1, further comprising:
a first filter unit, wherein the first filter unit is connected with each of the first amplifier unit and the antenna switch module, and is configured to filter a signal output by the first amplifier unit.

3. The radio frequency front-end module of claim 2, wherein the first amplifier unit is further configured to receive and amplify a signal at a third frequency band and a signal at a fourth frequency band; and
the first filter unit comprises:
a duplexer, wherein the duplexer is connected with the antenna switch module, and is configured to receive and filter the signal at the first frequency band and the signal at the third frequency band; and
a first filter, wherein the first filter is connected with the antenna switch module, and is configured to receive and filter the signal at the fourth frequency band.

4. The radio frequency front-end module of claim 3, wherein the first frequency band is B3, the second frequency band is N41, the third frequency band is B1, and the fourth frequency band is B25.

5. The radio frequency front-end module of claim 4, wherein an uplink signal at the B3 frequency band is transmitted to the antenna switch module, and an uplink signal at the N41 frequency band is switched to the second antenna interface through the first switch unit.

6. The radio frequency front-end module of claim 3, wherein the first frequency band is B66, the second frequency band is N41, the third frequency band is B1, and the fourth frequency band is B25.

7. The radio frequency front-end module of claim 3, further comprising:
a second switch unit, wherein the first switch unit is connected with each of the first amplifier unit, the duplexer and the first filter, and the second switch unit is configured to switch the duplexer or the first filter to be connected with the first amplifier unit.

8. The radio frequency front-end module of claim 7, wherein the second switch unit comprises:
a first single-pole triple-throw switch, wherein a common terminal of the first single-pole triple-throw switch is connected with the first amplifier unit, a first throw terminal of the first single-pole triple-throw switch is connected with a first input terminal of the duplexer, a second throw terminal of the first single-pole triple-throw switch is connected with a second input terminal of the duplexer, and a third throw terminal of the first single-pole triple-throw switch is connected to the first filter.

9. The radio frequency front-end module of claim 1, wherein the first switch unit comprises:
a single-pole double-throw switch, where a common terminal of the single-pole double-throw switch is connected with the second amplifier unit, a first throw terminal of the single-pole double-throw switch is connected with the antenna switch module, and a second throw terminal of the single-pole double-throw switch is connected with the second antenna interface.

10. The radio frequency front-end module of claim 9, wherein the second amplifier unit is further configured to receive and amplify a signal at a fifth frequency band, and the radio frequency front-end module further comprises:
a second filter, wherein the second filter is connected with the common terminal of the single-pole double-throw switch, and is configured to filter the signal at the second frequency band; and
a third filter, wherein the third filter is connected with the antenna switch module, and is configured to filter the signal at the fifth frequency band.

11. The radio frequency front-end module of claim 10, wherein the first frequency band is B3, the second frequency band is N41, and the fifth frequency band is N40.

12. The radio frequency front-end module of claim 10, further comprising:
a third switch unit, connected with each of the second amplifier unit, the second filter and the third filter.

13. The radio frequency front-end module of claim 12, further comprising:
a third antenna interface, configured to be connected with a third antenna;
wherein the third switch unit comprises:
a second single-pole triple-throw switch, wherein a common terminal of the second single-pole triple-throw switch is connected with the second amplifier unit, a first throw terminal of the second single-pole triple-throw switch is connected with the second filter, a second throw terminal of the second single-pole triple-throw switch is connected with the third filter, and a third throw terminal of the second single-pole triple-throw switch is connected with the third antenna interface.

14. The radio frequency front-end module of claim 13, wherein a fourth filter is provided between the third antenna interface and the third antenna, the fourth filter is configured to connect the third antenna and the third antenna interface, and the fourth filter is configured to filter the signal at the fifth frequency band when the third throw terminal and the common terminal of the second single-pole triple-throw switch are connected.

15. The radio frequency front-end module of claim 1, further comprising:
a packaging housing, provided with an accommodating portion, wherein the antenna switch module, the first amplifier unit, the second amplifier unit and the first switch unit are provided in the accommodating portion.

16. The radio frequency front-end module of claim 15, wherein the first antenna interface and the second antenna interface are provided at the packaging housing.

17. An antenna system, comprising the radio frequency front-end module of any one of claims 1 to 16.

18. The antenna system of claim 17, further comprising:
a first antenna, connected with the first antenna interface; and
a second antenna, connected with the second antenna interface.

19. The antenna system of claim 18, wherein the first antenna is configured to transmit an uplink signal at a B3 frequency band, and the second antenna is configured to transmit an uplink signal at a N41 frequency band.

20. An electronic device, comprising the radio frequency front-end module of any one of claims 17 to 19.
